# FASCICULE DE BREVET EUROPEEN

(11) **EP 3 649 400 B1**
(45) Date de publication et mention de la délivrance du brevet: **09.06.2021**
(21) Numéro de dépôt: 18733910.6
(22) Date de dépôt: 03.07.2018
(51) Int. Cl.: F23G 5/027, C10B 51/00, C10B 57/10, F23G 5/04, F23G 5/46

(54) **INSTALLATION DE THERMOLYSE OPTIMISÉE ET PROCÉDÉ DE MISE EN OEUVRE**
OPTIMIERTE THERMOLYSEANLAGE UND ENTSPRECHENDES ANWENDUNGSVERFAHREN
OPTIMISED THERMOLYSIS FACILITY AND IMPLEMENTATION METHOD

(30) Priorité: 07.07.2017 EP 17305889
(43) Date de publication de la demande: 13.05.2020
(73) Titulaire: Elyse Technology, 13100 Aix en Provence (FR)
(72) Inventeur: DALLES, Philippe, 13100 Aix En Provence (FR); GOURDIN, Jean-Paul, 13540 Puyricard (FR)
(74) Mandataire: Santarelli
(86) Numéro de dépôt international: PCT/EP2018/067959
(87) Numéro de publication internationale: WO 2019/007964

(56) Documents cités:
- EP-A2- 0 140 811
- WO-A1-00/75567
- WO-A1-2011/007505
- WO-A1-2011/160163
- WO-A1-2012/156769
- FR-A1- 2 937 331
- GB-A- 2 539 447
- US-A- 5 296 005
- US-A- 5 466 383
- US-A1- 2014 110 242

## Description

La présente invention a trait au domaine général d'une installation de thermolyse et d'un procédé de mise en œuvre de cette installation.

La thermolyse est un traitement thermique de déchets en l'absence d'air. La thermolyse n'est, en fait, qu'une application, adaptée aux déchets, de la technique traditionnelle de la fabrication du charbon de bois.

Le traitement thermique des déchets pourrait se faire par combustion mais alors en présence d'air. Cela pose l'inconvénient que les gaz de combustion (tel que le méthane) encore utilisables sont évacués avec les fumées (CO₂, N₂), ce qui diminue la rentabilité du procédé.

Les déchets à traiter sont généralement soit des produits de chimie organique (par exemple des plastiques, du caoutchouc, des peintures...) soit des composés hydrocarbonés et/ou des produits naturels ayant une forte proportion de carbone (par exemple des bois, des tissus, des végétaux...).

Dans la plupart des cas, les déchets à traiter doivent être prétraités avant le traitement par thermolyse pour améliorer la thermolyse. Ce prétraitement consiste à les sécher, voire à les broyer pour les homogénéiser. Le plus souvent, les déchets à traiter sont uniquement séchés.

En thermolyse, les déchets ne sont pas brûlés, mais chauffés en l'absence d'air dans une enceinte hermétique à température moyenne (180 à 400 °C), ce qui produit une calcination.

Le chauffage de l'enceinte se fait plutôt traditionnellement par l'extérieur, auquel cas l'enceinte est mise sous vide (en dépression). La chaleur et l'absence d'air entraînent une décomposition des matières organiques en deux parties : un composant solide et un gaz chaud.

Le composant solide est un résidu carboné qui contient des matières minérales qui n'ont pas pu être décomposées par la chaleur (métaux ferreux et non ferreux, verre, céramiques, graviers...), et, surtout, du carbone. Ce résidu carboné sort du four aux environs de 300-450 °C, et doit être refroidi. Le refroidissement peut être effectué sous azote, auquel cas il est suivi d'un lavage. De préférence, ce refroidissement peut être effectué par lavage par de l'eau, ce qui permet avantageusement de capter une partie du chlore le cas échéant. Le refroidissement est le plus souvent suivi d'un premier tri pour éliminer le verre et les inertes (graviers, céramiques), puis d'un deuxième tri éventuel pour séparer les métaux ferreux et non ferreux. Débarrassé d'une partie des matières minérales (verre, graviers) et des métaux, le résidu final est uniquement constitué de carbone et s'apparente à un charbon.

Un dégagement de gaz se produit pendant la thermolyse. Ce gaz est constitué d'une fraction condensable, c'est-à-dire qui peut être liquéfiée et donc se transformer en huile (vapeurs d'essence, vapeurs d'eau...), et d'une fraction non condensable, c'est-à-dire qui reste à l'état gazeux aux températures considérées (hydrogène, méthane, monoxyde de carbone, hydrocarbures...). Cette huile peut servir de combustible par exemple dans une chambre de combustion. Le gaz qui s'échappe généralement par le haut de l'enceinte, mélangé aux poussières, peut ensuite être traité de façon classique : dépoussiérage puis combustion. En général, ce gaz est brûlé en priorité. Cela permet de minimiser son stockage sur site. En effet, ce stockage est le plus souvent problématique, car, notamment, il nécessite une certaine capacité de stockage de ces gaz sous pression et il pose des problèmes de sécurité (car ces gaz sont combustibles).

Une installation de thermolyse des déchets est décrite par le document WO2012/156769.

Une installation de thermolyse présente donc, selon les techniques connues, l'inconvénient d'une très forte consommation énergétique due au chauffage, au séchage des produits à traiter, voire à une dilution des produits combustibles issus de la décomposition thermique avec les fumées de combustion.

L'invention concerne une installation de thermolyse, palliant les inconvénients évoqués précédemment des installations de l'état de la technique.

L'invention a ainsi pour objet, sous un premier aspect, une installation de thermolyse de déchets selon l'objet de la revendication 1.

Avantageusement selon l'invention, l'installation permet lors de sa mise en œuvre une économie substantielle de consommation d'énergie et d'apport de gaz de l'extérieur puisqu'elle permet d'utiliser, pour la deuxième enceinte de calcination, des gaz recyclés, qui sont des gaz combustibles, sans présence d'air ni d'oxygène de l'air, ce qui permet de garder l'atmosphère interne des enceintes en dépression et sans air. Ce recyclage n'appauvrit pas le pouvoir calorifique des gaz de thermolyse combustibles puisque ces gaz ont la même composition entre la sortie de l'enceinte et leur recyclage dans l'enceinte.

Avantageusement, les deux enceintes ont des fonctions différenciées et sont indépendantes, tout en fonctionnant en parallèle, ce qui facilite notablement l'accès pour la maintenance des équipements de type machine tournante.

Selon l'invention, il n'est pas nécessaire de disposer d'un système de chauffage spécifique sur le conduit de circulation : le système de chauffage de la deuxième enceinte est avantageusement utilisé.

Par « *au travers »* ou « *traverse »,* on entend selon l'invention qu'il n'y a pas de contact direct (et donc pas d'échange de contenu) avec l'intérieur du dispositif.

Selon l'invention, le conduit de circulation de gaz issu de la deuxième enceinte à la deuxième enceinte comporte de multiples orifices de sortie dans la deuxième enceinte.

Avantageusement, cela permet de favoriser la réaction de calcination ou pyrolyse qui se produit dans ladite deuxième enceinte.

Selon un mode de réalisation, le système de chauffage peut être alimenté par des fumées de chaudière, des fumées de turbine à gaz ou des fumées de turbine à vapeur.

La ou les pompes à vide permettent avantageusement de générer un vide dynamique, sans interruption de vide, sans sas et sans système de transfert. La pompe à vide peut être commune aux deux enceintes.

De préférence, le conduit de circulation de gaz issu de la deuxième enceinte à la deuxième enceinte traverse la chambre de combustion de la deuxième enceinte.

Dans ce cas, l'installation permet avantageusement le recyclage sans refroidissement et sans perte de débit : la fraction de gaz issue de la deuxième enceinte est réchauffée par la chambre de combustion avant de rejoindre la deuxième enceinte.

Selon un mode de réalisation, indépendant ou non du mode de réalisation précédent, l'installation comprend en outre au moins un conduit de circulation de gaz issu (ou extrait) de la deuxième enceinte à la première enceinte, de préférence au travers du système de chauffage de ladite première enceinte. De préférence, le conduit de circulation de gaz issu de la deuxième enceinte à la première enceinte traverse la chambre de combustion de la première enceinte.

Selon un mode de réalisation, indépendant ou non du ou des modes de réalisation précédents, l'installation comprend en outre au moins un conduit de circulation de gaz issu (ou extrait) de la première enceinte à la première enceinte au travers du système de chauffage de ladite première enceinte. De préférence, le conduit de circulation de gaz issu de la première enceinte à la première enceinte traverse la chambre de combustion de la première enceinte.

Dans tous les cas, la partie de conduit de circulation de gaz qui traverse la chambre de combustion est généralement en forme de serpentin, ce qui permet d'augmenter le temps de présence du gaz dans ladite partie de conduit et donc de le chauffer, de façon à ce que, lors de la mise en œuvre de l'installation, la température à leur recyclage dans l'enceinte soit supérieure, généralement d'au moins 50 °C, à la température dans l'enceinte. En outre, les gaz recyclés dans l'enceinte sont généralement à pression légèrement supérieure à la pression atmosphérique et sont donc aspirés par le vide régnant dans l'enceinte.

L'installation selon l'invention peut comprendre en outre au moins un conduit d'évacuation d'une partie des gaz issus de la première enceinte et/ou au moins un conduit d'évacuation d'une partie des gaz issus de la deuxième enceinte. (Par *« A et*/*ou B »,* on entend selon l'invention *« A, ou B, ou A et B »*).

Cela permet le bon fonctionnement de l'installation et tout particulièrement d'assurer les bilans matières. En d'autres termes, lors de la mise en œuvre de l'installation en thermolyse, le recyclage des gaz issus des deux enceintes n'est généralement pas complet.

Il est à noter à ce sujet que la présence de vapeur d'eau dans les gaz issus de la première enceinte et recyclés dans celle-ci ne pose généralement pas de problème au fonctionnement de la première enceinte. En effet, ils sont préalablement évacués par passage dans un système de refroidissement (tel un laveur) au sein duquel la condensation de l'eau permet la séparation des gaz combustibles qui sont recyclés dans la première enceinte.

Par *« par passage dans un dispositif »,* on entend selon l'invention qu'il n'y a pas de contact direct avec l'intérieur du dispositif.

La chambre de combustion de la première enceinte comporte généralement un brûleur alimenté en combustible de façon à produire de la chaleur. Ce combustible peut comporter, de préférence être constitué de, au moins une partie condensée de gaz issu de la deuxième enceinte. En général, c'est une partie condensée et hydrocarbonée dudit gaz.

La chambre de combustion de la deuxième enceinte comporte généralement un brûleur alimenté en combustible de façon à produire de la chaleur. Ce combustible peut comporter, de préférence être constitué de, au moins une partie de gaz issu de la deuxième enceinte. En général, c'est une partie condensée et hydrocarbonée dudit gaz.

À cet effet, selon une variante de l'invention, indépendante ou non du ou des modes de réalisation précédents, l'installation comprend en outre un conduit d'alimentation de l'une au moins des deux chambres de combustion par au moins un conduit de dérivation raccordé, directement ou indirectement, au conduit de circulation de gaz issu de la deuxième enceinte à la deuxième enceinte.

Il est également possible que la chambre de combustion de la première enceinte ne comporte pas de brûleur. En effet, la présence d'un brûleur n'est pas nécessaire dans la chambre de combustion de la première enceinte si les gaz chauds issus de la deuxième enceinte suffisent pour chauffer la première enceinte.

Selon une variante de l'invention, indépendante ou non du ou des modes de réalisation précédents, l'installation comprend en outre au moins un conduit de communication entre la chambre de combustion de la première enceinte et la chambre de combustion de la deuxième enceinte. Dans ce cas, il n'est généralement pas nécessaire de mettre en fonctionnement le brûleur de la chambre de combustion de la première enceinte pour que la chambre de combustion remplisse son rôle de système de chauffage de la première enceinte.

Selon un mode de réalisation préféré de l'invention, indépendant ou non du ou des modes de réalisation précédents, l'installation comprend en outre une troisième enceinte de refroidissement, apte à opérer sous vide et apte à refroidir les résidus solides issus de la deuxième enceinte.

Selon une variante préférée, l'installation comprend alors en outre un sas d'introduction (ou d'entrée) des déchets entrants dans la première enceinte et/ou, de préférence et, un sas de sortie des résidus solides refroidis issus de la troisième enceinte, chacun des sas étant relié à au moins une pompe à vide. Dans le cas de la présence des deux sas, chacun des sas est relié à la même pompe à vide.

Avantageusement, cela permet de pouvoir utiliser une seule pompe à vide pour chacun des sas, l'ouverture des sas se faisant généralement de façon ponctuelle et indépendante.

Selon l'invention, les trois enceintes ont avantageusement des fonctions différenciées et sont indépendantes, tout en fonctionnant en parallèle, ce qui facilite notablement l'accès pour la maintenance des équipements de type machine tournante.

L'invention a aussi pour objet, sous un deuxième aspect, un procédé de thermolyse selon l'objet de la revendication 10.

Selon l'invention, il n'est pas procédé à un chauffage du gaz recyclé dans la deuxième enceinte : le chauffage s'effectue avantageusement par le système de chauffage de la deuxième enceinte.

Selon l'invention, le gaz recyclé dans la deuxième enceinte est réinjecté dans ladite enceinte en de multiples endroits de la deuxième enceinte.

Avantageusement, cela permet de favoriser la réaction de calcination ou pyrolyse qui se produit dans ladite deuxième enceinte.

De préférence, ledit chauffage est effectué par passage dans la chambre de combustion de ladite deuxième enceinte.

Dans ce cas, le procédé permet avantageusement le recyclage sans refroidissement et sans perte de débit : la fraction de gaz recyclé est réchauffée par la chambre de combustion avant de rejoindre la deuxième enceinte.

De préférence, selon un mode de réalisation de l'invention, on procède à un recyclage de gaz issu de la deuxième enceinte à la première enceinte, éventuellement après chauffage au travers du système de chauffage par l'extérieur de ladite première enceinte. De préférence, ledit chauffage est effectué par passage dans la chambre de combustion de la première enceinte.

En pratique, le vide dans la première enceinte est généralement de 0,3 à 0,5 bar (30 à 50 MPa). Le vide dans la première enceinte permet au gaz réchauffé, à pression supérieure à la pression atmosphérique en sortie de pompe à vide, d'être aspiré par le vide régnant dans l'enceinte. Pour initier le séchage, on commence à chauffer en utilisant du gaz stocké dans un réservoir avant que le procédé ne produise du gaz. On peut également utiliser le recyclage des gaz de la deuxième enceinte dans la première enceinte, ce qui permet de dépasser 100 °C. La température en sortie de la première enceinte est comprise entre 100 et 120 °C. En passant au travers d'un serpentin dans la chambre de combustion, la température du gaz à recycler depuis la deuxième enceinte dans la première enceinte, lorsque ce recyclage existe, peut atteindre 300 °C.

En pratique, le vide dans la deuxième enceinte est généralement de 0,3 à 0,5 bar (30 à 50 MPa). Le vide dans la deuxième enceinte permet au gaz réchauffé, à pression supérieure à la pression atmosphérique en sortie de pompe à vide, d'être aspiré par le vide régnant dans l'enceinte. Pour initier la calcination, il faut une température de plus de 180 °C dans la deuxième enceinte. En fonctionnement, la température en sortie de la deuxième enceinte est comprise entre 250 et 400 °C. En passant au travers d'un serpentin dans la chambre de combustion, la température du gaz à recycler dans la deuxième enceinte peut atteindre de 400 à 600 °C.

Selon un mode de réalisation de l'invention, indépendant ou non du mode de réalisation précédent, on procède à au moins un recyclage de gaz issu de la première enceinte à la première enceinte après chauffage au travers du système de chauffage par l'extérieur de la première enceinte. De préférence, ledit chauffage est effectué par passage dans la chambre de combustion de la première enceinte.

Selon un mode de réalisation de l'invention, indépendant ou non du ou des modes de réalisation précédents, on procède à une alimentation de l'une au moins des deux chambres de combustion de la première enceinte et de la deuxième enceinte par au moins une partie des gaz issus de la première enceinte et/ou de la deuxième enceinte, de préférence issus de la deuxième enceinte. De préférence, ladite partie des gaz est prétraitée avant d'alimenter la ou les chambres de combustion. Un tel prétraitement peut comprendre un traitement pour enlever l'eau, par exemple une condensation. Un tel prétraitement peut comprendre un passage dans un système de refroidissement tel qu'un laveur.

Mais il est également possible d'alimenter ces chambres de combustion par une partie des fumées d'une chaudière de valorisation des combustibles. Une telle chaudière, présente de façon optionnelle sur le site hébergeant l'installation de thermolyse, est typiquement une chaudière à vapeur qui fonctionne généralement à partir des combustibles (charbon, huiles et gaz résiduel) issus du procédé et qui peut produire de l'électricité. Elle produit de la fumée à environ 700 °C, qui peut être utilisée dans les chambres de combustion.

Selon un mode de réalisation de l'invention, indépendant ou non du ou des modes de réalisation précédents, on procède à un refroidissement des résidus solides issus de la deuxième enceinte dans une troisième enceinte de refroidissement opérant sous vide. De préférence, ledit refroidissement est un lavage à l'eau, effectué généralement dans un laveur.

Avantageusement, cela permet d'éviter une auto-combustion de ces solides au cours de leur remise à l'air libre, avant l'introduction de ces solides, généralement à une température inférieure à 60 °C, pour leur tri éventuel. D'autre part, l'eau, si elle est utilisée, permet de récupérer une partie des polluants, tels que le chlore et/ou des métaux lourds, qui seraient présents dans ces résidus solides.

L'exposé de l'invention sera maintenant poursuivi par la description détaillée d'un exemple de réalisation, donné ci-après à titre illustratif et non limitatif, en référence au dessin annexé. Sur celui-ci :

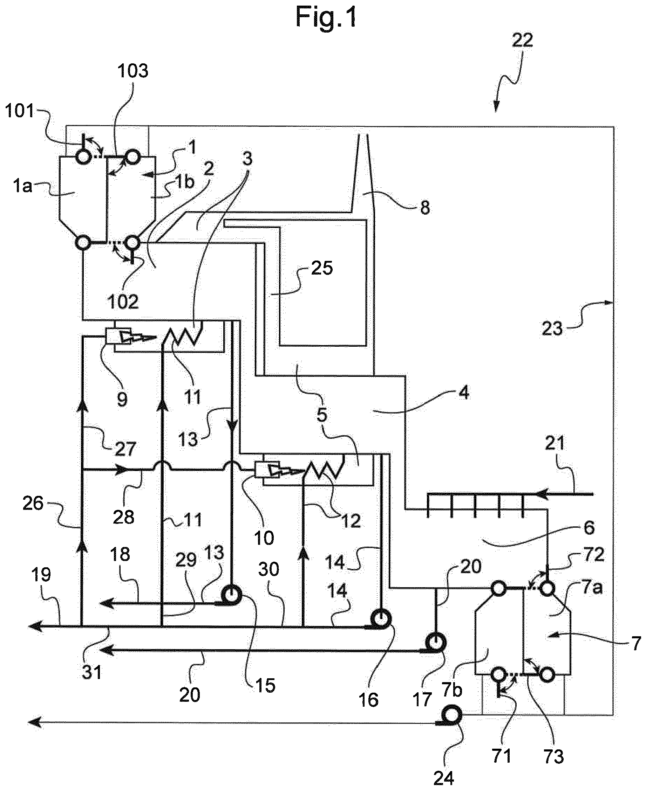

- la Figure 1 est une vue schématique en coupe d'une installation de thermolyse selon l'invention.

La Figure 1 illustre une installation 22 de thermolyse de déchets comprenant une première enceinte 2 de séchage et une deuxième enceinte 4 de calcination. Sur cette Figure, les sens de circulation des fluides sont indiqués par des flèches. Sauf s'il est expressément indiqué que tel n'est pas le cas, le fait que deux conduits qui se croisent sur la Figure 1 signifie que ces conduits sont raccordés.

La première enceinte 2 est apte à opérer sous vide et est apte à sécher les déchets entrants, pour leur traitement subséquent par thermolyse dans l'enceinte de calcination 4. Elle comprend un système de chauffage par l'extérieur constitué d'une chambre de combustion 3, comportant un brûleur 9, et d'une pompe à vide 15 permettant de maintenir le vide dans ladite enceinte 2 et relié à ladite enceinte 2 par un conduit d'extraction 13. Cette chambre de combustion 3 comporte une paroi formant double enveloppe ceinturant l'enceinte 2. Selon l'invention, l'installation 22 comporte un conduit de circulation (13; 29; 11) constitué du conduit d'extraction 13 permettant le passage par la pompe à vide 15, ledit conduit 13 débouchant sur un conduit 18 permettant une évacuation des gaz, un conduit 29 et un conduit de circulation 11 de gaz vers la première enceinte 2. Le conduit 11 passe au travers du système de chauffage de ladite première enceinte 2, c'est-à-dire au travers de la chambre de combustion 3. Le conduit 11 prend à cet endroit une forme de serpentin destinée à allonger le temps de présence du gaz présent dans le conduit 11 au sein de la chambre de combustion 3. Les gaz qui ne sont pas recyclés dans la première enceinte 2 sont susceptibles d'être évacués par le conduit d'évacuation 18.

La deuxième enceinte 4 est apte à opérer sous vide et est apte à traiter en calcination les déchets séchés issus de la première enceinte 2. Elle comprend un système de chauffage par l'extérieur constitué d'une chambre de combustion 5, comportant un brûleur 10, et d'une pompe à vide 16 permettant de maintenir le vide dans ladite enceinte 4 et relié à ladite enceinte 4 par un conduit d'extraction 14. Cette chambre de combustion 5 comporte une paroi formant double enveloppe ceinturant l'enceinte 4. Selon l'invention, l'installation 22 comporte un conduit de circulation (14,12) constitué du conduit d'extraction 14 permettant le passage par la pompe à vide 16, ledit conduit 14 se divisant en un conduit 30 et un conduit de circulation 12 de gaz vers la deuxième enceinte 4. Le conduit 12 passe au travers du système de chauffage de ladite deuxième enceinte 4, c'est-à-dire au travers de la chambre de combustion 5. Le conduit 12 prend à cet endroit une forme de serpentin destinée à allonger le temps de présence du gaz présent dans le conduit 12 au sein de la chambre de combustion 5. Les gaz qui ne sont pas recyclés dans la deuxième enceinte 4 sont susceptibles d'être évacués par un conduit 19 permettant une évacuation des gaz, le conduit 19 étant raccordé au conduit 14 par le conduit 30 puis un conduit 31.

Selon la variante représentée sur la Figure 1, le conduit 31 se divise en le conduit 19 et un conduit 26. Le conduit 26 se divise en les conduits 27 et 28 (qui n'est pas raccordé aux conduits 11 et 13), permettant respectivement d'apporter une partie des gaz évacués vers les brûleurs respectifs 9 et 10 des chambres de combustion respectives 3 et 5. Ces gaz subissent habituellement un prétraitement (non représenté), entre autres de condensation et d'élimination d'eau, avant d'alimenter les brûleurs 9 et 10. Lors du fonctionnement de l'installation 22, il est possible qu'un seul des brûleurs 9 et 10 soit alimenté par au moins une partie de gaz issus de la deuxième enceinte 4.

Selon une variante non représentée, il est également possible de prévoir un circuit d'apport vers l'un au moins des brûleurs 9 et 10 à partir du conduit d'évacuation 18 relié à la première enceinte 2.

Selon une autre variante, non représentée, il est possible que la chambre de combustion 3 ne comprenne pas de brûleur 9, la chambre de combustion 3 étant uniquement chauffée par l'apport de gaz issu de la deuxième enceinte 4.

Selon l'invention, l'installation 22 comprend en outre un conduit de circulation (14, 30, 29, 11) de gaz issu de la deuxième enceinte 4 à la première enceinte 2 au travers du système de chauffage, c'est-à-dire de la chambre de combustion 3, de ladite première enceinte 2. Ce conduit de circulation est formé du conduit 14, du conduit 30 (qui se divise en le conduit 31 et un conduit 29), du conduit 29 et du conduit 11.

Les fumées de combustion des chambres de combustion 3 et 5 sont destinées à être évacuées par une cheminée 8. Selon la variante représentée sur la Figure 1, les chambres de combustion 3 et 5 sont reliées par un conduit de communication 25.

L'installation 22 comprend en outre une troisième enceinte 6 de refroidissement par lavage à l'eau, apte à opérer sous vide et apte à refroidir les résidus solides issus de la deuxième enceinte 4.

L'enceinte 6 de refroidissement est alimentée par un circuit de refroidissement 21, apte à utiliser de l'eau, qui débouche par une multitude de jets dans l'enceinte 6. Le vide est maintenu dans l'enceinte 6 par une pompe à vide 17, qui est apte à évacuer les gaz ainsi extraits par un conduit d'évacuation 20. La vapeur d'eau est condensée et évacuée par un conduit d'évacuation (non représenté).

L'installation 22 comprend en outre un sas d'entrée 1, constitué de deux sous-parties 1a et 1b et de trois vannes 101, 102 et 103. Par le jeu des déplacements des vannes 101, 102 et 103, le sas 1 peut fonctionner. Dans un premier temps, des déchets entrants (non représentés) sont introduits depuis l'extérieur de l'installation 22 dans une première sous-partie 1a du sas 1, sous pression atmosphérique, par l'ouverture de la vanne 101, tandis que l'autre sous-partie 1b du sas 1 est isolée de l'extérieur par la fermeture de la vanne 103. La vanne 102 est fermée, isolant l'enceinte 2 du sas 1. Dans un deuxième temps, la vanne 101 est fermée et les déchets sont transvasés dans la seconde sous-partie 1b du sas 1, sous dépression, par ouverture de la vanne 103. Enfin, dans un troisième temps, l'ouverture de la vanne 102 permet l'entrée des déchets dans l'enceinte 2. Dans le cas représenté sur la Figure 1, les vannes 101 et 102 sont ouvertes et la vanne 103 est fermée.

L'installation 22 comprend en outre un sas de sortie 7, constitué de deux sous-parties 7a et 7b et de trois vannes 71, 72 et 73. Par le jeu des déplacements des vannes 71, 72 et 73, le sas 7 peut fonctionner. Dans un premier temps, des résidus solides refroidis (non représentés) sont sortis de l'enceinte 6 vers une première sous-partie 7a du sas 7, sous dépression, par l'ouverture de la vanne 72, tandis que l'autre sous-partie 7b du sas 7 est isolée de l'enceinte 6 par la fermeture de la vanne 73. La vanne 71 est fermée, isolant le sas 7 de l'extérieur. Dans un deuxième temps, la vanne 72 est fermée et les résidus solides sont transvasés dans la seconde sous-partie 7b du sas 7, sous pression atmosphérique, par ouverture de la vanne 73. Enfin, dans un troisième temps, l'ouverture de la vanne 71 permet la sortie des résidus à l'extérieur de l'installation 22. Dans le cas représenté sur la Figure 1, les vannes 71 et 72 sont ouvertes et la vanne 73 est fermée.

Un circuit de vide 23 est susceptible d'être formé par une pompe à vide 24, reliant les sas 1 et 7. Les gaz extraits pour le maintien du vide sont évacués par la pompe à vide 24.

La mise en œuvre, complète ou partielle, de l'installation 22 réalise un procédé de thermolyse selon l'invention, tel qu'il est utilisé dans les deux exemples de réalisation ci-après. L'installation permet de mettre en œuvre différents modes de réalisation de l'invention, tels que décrits ci-avant. Dans les exemples, deux modes de réalisation sont utilisés, décrits ci-après. Ces modes utilisent en partie l'installation 22 décrite ci-dessus, en particulier en ce qui concerne le recyclage des gaz combustibles issus de la deuxième enceinte 4, voire en ce qui concerne le refroidissement des résidus solides issus de la deuxième enceinte 4.

Selon ce procédé de thermolyse, on introduit des déchets entrants, via le sas 1, dans la première enceinte 2 de séchage, opérant sous vide, puis l'on introduit les déchets séchés issus de la première enceinte 2 dans la deuxième enceinte 4, opérant sous vide. On introduit ensuite éventuellement dans la troisième enceinte 6 les résidus solides issus de la deuxième enceinte 4, opérant sous vide. Enfin, on extrait éventuellement les résidus solides refroidis de l'enceinte 6 via le sas 7.

Un recyclage par les conduits 14 puis 12 est opéré, de gaz issus de la deuxième enceinte 4 à la deuxième enceinte 4, au travers de la chambre de combustion 5 de la deuxième enceinte 4.

Un recyclage par les conduits 13 puis 11 peut être opéré, de gaz issus de la première enceinte 2 à la première enceinte 2, au travers de la chambre de combustion 3 de la première enceinte 2.

Un recyclage par les conduits 14 puis 30 puis 29 puis 11 peut être opéré, de gaz issus de la deuxième enceinte 4 à la première enceinte 2, au travers de la chambre de combustion 3 de la première enceinte 2.

Il est procédé à une alimentation des deux chambres de combustion 3 et 5 des première enceinte 2 et deuxième enceinte 4 par au moins une partie des gaz issus de la deuxième enceinte 4, par les conduits 26, 27 et 28.

Selon un premier exemple de réalisation, trois enceintes 2, 4 et 6 ont chacune un diamètre interne d'environ 2 m et de longueur d'environ 6 m. L'installation 22 comportant les trois enceintes a une capacité de traitement d'environ 10 000 tonnes par an selon le type de déchet. Les fumées 8 permettent de faire fonctionner une unité électrique d'environ 5 MW. De 5 à 15 % des combustibles servent au procédé de calcination proprement dit.

Les conditions opératoires du procédé sont les suivantes :
- la température dans l'enceinte de séchage 2 est d'environ 100 °C ;
- la température de l'enceinte de calcination 4 est d'environ 180 à 400 °C;
- la température des fumées de combustion dans les chambres de combustion 3 et 5 est d'environ 1200 °C ; et
- la température des fumées de combustion dans la cheminée 8 est d'environ 200 à 400 °C.

En pratique, 1000 kg de produits à traiter, selon deux cas différents, ont été introduits dans le première enceinte 2 et donnent lieu :
- soit à 300 kg et 240 kg de solides (charbons), 130 kg d'huiles et 100 kg de gaz dans le cas où les produits à traiter sont des ordures ménagères ;
- soit à 30 kg et 280 kg de solides (charbons), 380 kg d'huiles et 150 kg de gaz dans le cas où les produits à traiter sont des pneumatiques.

Selon un second exemple de réalisation, 500 kg de produits à traiter (ordures ménagères), à 30 % d'humidité, ont été traités dans deux enceintes, à savoir l'enceinte de séchage (première enceinte) et l'enceinte de calcination (deuxième enceinte). En effet, dans ce cas, le refroidissement est effectué dans l'enceinte de calcination après la calcination.

Le chauffage au démarrage a été effectué avec du gaz d'appoint (réseau de gaz). Les gaz extraits par une pompe à anneau liquide ont été maintenus à environ 100 °C tant que les produits n'étaient pas secs. Après passage dans la seconde enceinte, la température des gaz est montée jusqu'à 250 °C en moyenne après une période de chauffe de 45 minutes. Le gaz extrait a été utilisé comme combustible pour le procédé. Environ 70 kg d'huile, 120 kg de charbon et 100 kg d'inertes comprenant des métaux et des minéraux ont été récupérés. En l'absence d'oxygène, les métaux n'étaient pas rouillés.

## Revendications

1. Installation (22) de thermolyse de déchets comprenant au moins deux enceintes (2,4), à savoir une première enceinte (2) de séchage et une deuxième enceinte (4) de calcination, chacune de ces deux enceintes (2,4) étant apte à opérer sous vide, la première enceinte (2) étant apte à sécher les déchets entrants et la deuxième enceinte (4) étant apte à traiter en calcination les déchets séchés issus de la première enceinte (2), chacune des deux enceintes (2,4) de séchage et de calcination comprenant un système de chauffage par l'extérieur comportant au moins une chambre de combustion (3,5), et au moins une pompe à vide (15,16) permettant de maintenir le vide dans ladite enceinte (2,4) et reliée à ladite enceinte (2,4) par un conduit d'extraction (13,14), ladite installation (22) étant **caractérisée en ce qu'**elle comporte au moins un conduit de circulation (14,12) de gaz issu de la deuxième enceinte (4) à la deuxième enceinte (4) au travers du système de chauffage (5) par l'extérieur de la deuxième enceinte (4), le conduit de circulation (12) de gaz issu de la deuxième enceinte (4) à la deuxième enceinte (4) comportant de multiples orifices de sortie dans la deuxième enceinte (4).

2. Installation (22) de thermolyse selon la revendication 1, comportant en outre au moins un conduit de circulation (14,30,29,11) de gaz issu de la deuxième enceinte (4) à la première enceinte (2), de préférence au travers du système de chauffage (3) par l'extérieur de la première enceinte (2).

3. Installation (22) de thermolyse selon la revendication 2, dans laquelle le conduit de circulation (14,30,29,11) de gaz issu de la deuxième enceinte (4) à la première enceinte (2) traverse la chambre de combustion (3) de la première enceinte (2).

4. Installation (22) de thermolyse selon l'une quelconque des revendications 1 à 3, dans laquelle la chambre de combustion (5) de la deuxième enceinte (4) comporte une paroi formant double enveloppe ceinturant l'enceinte (4), et le conduit de circulation (14,12) de gaz issu de la deuxième enceinte (4) à la deuxième enceinte (4) chemine à l'intérieur de la double enveloppe de la deuxième enceinte (4).

5. Installation (22) de thermolyse selon la revendication 4, comprenant en outre au moins un conduit de circulation (13,11) de gaz issu de la première enceinte (2) à la première enceinte (2), lequel conduit (13,11) traverse de préférence la chambre de combustion (3) de la première enceinte (2).

6. Installation (22) selon l'une quelconque des revendications 1 à 5, comprenant en outre au moins un conduit d'alimentation (27,28) de l'une au moins des deux chambres de combustion (3, 5) par au moins un conduit de dérivation (30,31,26) raccordé au conduit de circulation (14,12) de gaz issu de la deuxième enceinte (4) à la deuxième enceinte (4).

7. Installation (22) selon l'une quelconque des revendications 1 à 6, comprenant en outre au moins un conduit de communication (25) entre la chambre de combustion (3) de la première enceinte (2) et la chambre de combustion (5) de la deuxième enceinte (4).

8. Installation (22) de thermolyse selon l'une quelconque des revendications 1 à 7, comprenant en outre une troisième enceinte (6) de refroidissement, apte à opérer sous vide et apte à refroidir les résidus solides issus de la deuxième enceinte (4).

9. Installation (22) selon la revendication 8, comprenant en outre un sas (1) d'introduction des déchets entrants dans la première enceinte (2) et/ou un sas (7) de sortie des résidus solides refroidis issus de la troisième enceinte (6), chacun des sas (1, 7) étant relié à au moins une pompe à vide (24).

10. Procédé de thermolyse de mise en œuvre de l'installation (22) selon l'une des revendications 1 à 9, ladite installation (22) comprenant au moins deux enceintes (2,4) successives, à savoir une première enceinte (2) de séchage et une deuxième enceinte (4) de calcination, chacune des deux enceintes (2,4) de séchage et de calcination comprenant un système de chauffage par l'extérieur comportant au moins une chambre de combustion (3,5), et au moins une pompe à vide (15,16) permettant de maintenir le vide dans ladite enceinte par extraction de gaz de l'enceinte (2,4), ledit procédé étant tel que l'on introduit des déchets entrants dans la première enceinte (2) de séchage opérant sous vide et que l'on introduit les déchets séchés issus de la première enceinte (2) dans la deuxième enceinte (4) de calcination opérant sous vide, ledit procédé étant **caractérisé en ce qu'**il comporte au moins un recyclage (14,12) de gaz issu de la deuxième enceinte (4) à la deuxième enceinte (4) après chauffage au travers du système de chauffage (5) par l'extérieur de la deuxième enceinte (4), de préférence effectué par passage dans la chambre de combustion (5) de ladite deuxième enceinte (4), le gaz ainsi recyclé étant réinjecté dans la deuxième enceinte (4) en de multiples endroits de la deuxième enceinte.

11. Procédé de thermolyse selon l'une quelconque des revendications 10 ou 11, dans lequel on procède à un recyclage (30,29,11) de gaz issu de la deuxième enceinte (4) à la première enceinte (2), éventuellement après chauffage au travers du système de chauffage (3) de ladite première enceinte (2).

12. Procédé de thermolyse selon l'une des revendications 10 ou 11, dans lequel la chambre de combustion (5) de la deuxième enceinte (4) comporte une paroi formant double enveloppe ceinturant l'enceinte (4), et ledit chauffage du gaz recyclé au travers du système de chauffage (5) par l'extérieur de la deuxième enceinte (4) est effectué par passage dans la double enveloppe de ladite deuxième enceinte (4).

13. Procédé de thermolyse selon l'une quelconque des revendications 10 à 12, dans lequel on procède à une alimentation (27,28) de l'une au moins des deux chambres de combustion (3, 5) de la première enceinte (2) et de la deuxième enceinte (4) par au moins une partie des gaz issus de la première enceinte (2) et/ou de la deuxième enceintes (4).

14. Procédé de thermolyse selon la revendication 13, dans lequel ladite partie des gaz est prétraitée avant d'alimenter la ou les chambres de combustion (3,5).

15. Procédé de thermolyse selon l'une quelconque des revendications 10 à 14, dans lequel on procède à un refroidissement des résidus solides issus de la deuxième enceinte (4) dans une troisième enceinte (6) de refroidissement opérant sous vide.

## Patentansprüche

1. Anlage (22) zur Thermolyse von Abfällen, enthaltend zumindest zwei Räume (2, 4), nämlich einen ersten Raum (2) zur Trocknung und einen zweiten Raum (4) zur Kalzinierung, wobei jeder dieser beiden Räume (2, 4) dazu geeignet ist, unter Vakuum betrieben zu werden, wobei der erste Raum (2) dazu geeignet ist, die anfallenden Abfälle zu trocknen und der zweite Raum (4) dazu geeignet ist, die aus dem ersten Raum (2) stammenden getrockneten Abfälle durch Kalzinierung zu behandeln, wobei jeder der beiden Räume (2, 4) zur Trocknung bzw. Kalzinierung ein Außenerhitzungssystem mit zumindest einer Brennkammer (3, 5) und zumindest eine Vakuumpumpe (15, 16) enthält, mit der das Vakuum in dem Raum (2, 4) aufrechterhalten werden kann und die über eine Abführleitung (13, 14) mit dem Raum (2, 4) verbunden ist,
wobei die Anlage (22) **dadurch gekennzeichnet ist, dass** sie zumindest eine zum zweiten Raum (4) führende Zirkulationsleitung (14, 12) für aus dem zweiten Raum (4) stammendes Gas durch das Außenerhitzungssystem (5) des zweiten Raums (4) hindurch enthält, wobei die zum zweiten Raum (4) führende Zirkulationsleitung (12) für aus dem zweiten Raum (4) stammendes Gas mehrere Auslassöffnungen in den zweiten Raum (4) enthält.

2. Thermolyseanlage (22) nach Anspruch 1, ferner enthaltend zumindest eine zum ersten Raum (2) führende Zirkulationsleitung (14, 30, 29, 11) für aus dem zweiten Raum (4) stammendes Gas, vorzugsweise durch das Außenerhitzungssystem (3) des ersten Raums (2) hindurch.

3. Thermolyseanlage (22) nach Anspruch 2, wobei die zum ersten Raum (2) führende Zirkulationsleitung (14, 30, 29, 11) für aus dem zweiten Raum (4) stammendes Gas durch die Brennkammer (3) des ersten Raums (2) hindurch führt.

4. Thermolyseanlage (22) nach einem der Ansprüche 1 bis 3, wobei die Brennkammer (5) des zweiten Raums (4) eine Doppelmantelwandung enthält, die den Raum (4) umgibt, wobei die zum zweiten Raum (4) führende Zirkulationsleitung (14, 12) für aus dem zweiten Raum (4) stammendes Gas innerhalb des Doppelmantels des zweiten Raums (4) verläuft.

5. Thermolyseanlage (22) nach Anspruch 4, ferner enthaltend zumindest eine zum ersten Raum (2) führende Zirkulationsleitung (13, 11) für aus dem ersten Raum (2) stammendes Gas, welche Leitung (13, 11) vorzugsweise durch die Brennkammer (3) des ersten Raums (2) hindurch führt.

6. Anlage (22) nach einem der Ansprüche 1 bis 5, ferner enthaltend zumindest eine Beschickungsleitung (27, 28) für zumindest eine der beiden Brennkammern (3, 5) über zumindest eine Bypass-Leitung (30, 31, 26), die an die zum zweiten Raum (4) führende Zirkulationsleitung (14, 12) für aus dem zweiten Raum (4) stammendes Gas angeschlossen ist.

7. Anlage (22) nach einem der Ansprüche 1 bis 6, ferner enthaltend zumindest eine Kommunikationsleitung (25) zwischen der Brennkammer (3) des ersten Raums (2) und der Brennkammer (5) des zweiten Raums (4).

8. Thermolyseanlage (22) nach einem der Ansprüche 1 bis 7, ferner enthaltend einen dritten Raum (6) zur Abkühlung, der dazu geeignet ist, unter Vakuum betrieben zu werden und die aus dem zweiten Raum (4) stammenden festen Rückstände abzukühlen.

9. Anlage (22) nach Anspruch 8, ferner enthaltend eine Schleuse (1) zum Einbringen der anfallenden Abfälle in den ersten Raum (2) und/oder eine Schleuse (7) zum Ausbringen der aus dem dritten Raum (6) stammenden abgekühlten festen Rückstände, wobei jede der Schleusen (1, 7) mit zumindest einer Vakuumpumpe (24) verbunden ist.

10. Thermolyseverfahren zum Anwenden der Anlage (22) nach einem der Ansprüche 1 bis 9, wobei die Anlage (22) zumindest zwei aufeinanderfolgende Räume (2, 4) enthält, nämlich einen ersten Raum (2) zur Trocknung und einen zweitem Raum (4) zur Kalzinierung, wobei jeder der beiden Räume (2, 4) zur Trocknung bzw. Kalzinierung ein Außenerhitzungssystem mit zumindest einer Brennkammer (3, 5) und zumindest eine Vakuumpumpe (15, 16) enthält, mit der das Vakuum in dem Raum durch Abführen von Gas aus dem Raum (2, 4) aufrechterhalten werden kann,
wobei das Verfahren derart ist, dass anfallende Abfälle in den unter Vakuum betriebenen ersten Raum (2) zur Trocknung eingebracht werden und dass die aus dem ersten Raum (2) stammenden getrockneten Abfälle in den unter Vakuum betriebenen zweiten Raum (4) zur Kalzinierung eingebracht werden,
wobei das Verfahren **dadurch gekennzeichnet ist, dass** es zumindest eine zum zweiten Raum (4) führende Rückführung (14, 12) für aus dem zweiten Raum (4) stammendes Gas nach Erhitzung durch das Außenerhitzungssystem (5) des zweiten Raums (4) umfasst, vorzugsweise durch Überführen in die Brennkammer (5) des zweiten Raums (4), wobei das so rückgeführte Gas an mehreren Stellen des zweiten Raums erneut in den zweiten Raum (4) eingeleitet wird.

11. Thermolyseverfahren nach einem der Ansprüche 10 oder 11, wobei eine zum ersten Raum (2) führende Rückführung (30, 29, 11) für aus dem zweiten Raum (4) stammendes Gas gegebenenfalls nach Erhitzung durch das Erhitzungssystem (3) des ersten Raums (2) erfolgt.

12. Thermolyseverfahren nach einem der Ansprüche 10 oder 11, wobei die Brennkammer (5) des zweiten Raums (4) eine Doppelmantelwandung enthält, die den Raum (4) umgibt, und wobei die Erhitzung von rückgeführtem Gas durch das Außenerhitzungssystem (5) des zweiten Raums (4) hindurch durch Überführen in den Doppelmantel des zweiten Raums (4) erfolgt.

13. Thermolyseverfahren nach einem der Ansprüche 10 bis 12, wobei eine Beschickung (27, 28) zumindest einer der beiden Brennkammern (3, 5) des ersten Raums (2) und des zweiten Raums (4) mit zumindest einem Teil der aus dem ersten Raum (2) und/oder aus dem zweiten Raums (4) stammenden Gase erfolgt.

14. Thermolyseverfahren nach Anspruch 13, wobei der Teil der Gase vor der Beschickung der Brennkammer bzw. Brennkammern (3, 5) vorbehandelt wird.

15. Thermolyseverfahren nach einem der Ansprüche 10 bis 14, wobei eine Abkühlung der aus dem zweiten Raum (4) stammenden festen Rückstände in einem unter Vakuum betriebenen dritten Raum (6) zur Abkühlung erfolgt.

## Claims

1. Installation (22) for thermolysis of waste comprising at least two vessels (2,4), that is to say a drying first vessel (2) and a calcining second vessel (4), each of these two vessels (2,4) being able to operate under a vacuum, the first vessel (2) being able to dry the incoming waste and the second vessel (4) being able to perform calcination treatment of the dried waste from the first vessel (2), each of the two vessels (2,4), for drying and calcining comprising a system for external heating having at least one combustion chamber (3,5), and at least one vacuum pump (15,16) making it possible to maintain the vacuum in said vessel (2,4) and which is linked to said vessel (2,4) by an extraction pipe (13,14),
said installation (22) being **characterized in that** it comprises at least one pipe (14,12) for circulating gas from the second vessel (4) to the second vessel (4) through the system for external heating (5) of the second vessel (4), the pipe (14,12) for circulating gas from the second vessel (4) to the second vessel (4) having multiples exit holes to the second vessel (4).

2. Thermolysis installation (22) according to claim 1, further comprising at least one pipe (14, 30, 29, 11) for circulating gas from the second vessel (4) to the first vessel (2), preferably through the system for external heating (3) of the first vessel (2).

3. Thermolysis installation (22) according to claim 2, wherein the pipe (14, 30, 29, 11) for circulating gas from the second vessel (4) to the first vessel (2) passes through the combustion chamber (3) of the first vessel (2).

4. Thermolysis installation (22) according to any one of claims 1 to 3, wherein the combustion chamber (3) of the second vessel (4) comprises a wall forming a double shell surrounding the vessel (4), and the pipe (14,12) for circulating gas from the second vessel (4) to the second vessel (4) runs inside the double shell of the second vessel (4).

5. Thermolysis installation (22) according to claim 4, further comprising at least one pipe (13, 11) for circulating gas from the first vessel (2) to the first vessel (2), which pipe (13, 11) preferably passes through the combustion chamber (3) of the first vessel (2).

6. Installation (22) according to any one of claims 1 to 5, further comprising at least one supply pipe (27, 28) for supplying at least one of the two combustion chambers (3, 5) by at least one diverting pipe (30, 31, 26) connected to the pipe (14,12) for circulating gas from the second vessel (4) to the second vessel (4).

7. Installation (22) according to any one of claims 1 to 6, further comprising at least one communication pipe (25) between the combustion chamber (3) of the first vessel (2) and the combustion chamber (5) of the second vessel (4).

8. Thermolysis installation (22) according to any one of claims 1 to 7, further comprising a third vessel (6) for cooling, able to operate under a vacuum and able to cool the solid residues from the second vessel (4).

9. Installation (22) according to claim 8, further comprising a lock (1) for introduction of incoming waste into the first vessel (2) and/or a lock (7) for exit of the cooled solid residues from the third vessel (6), each of the locks (1, 7) being connected to at least one vacuum pump (24).

10. Thermolysis method for implementing the installation (22) according to one of claims 1 and 9, said installation (22) comprising at least two successive vessels (2,4), that is to say a drying first vessel (2) and a calcining second vessel (4), each of the two vessels (2,4), for drying and calcining comprising a system for external heating comprising at least one combustion chamber (3,5), and at least one vacuum pump (15,16) making it possible to maintain the vacuum in said vessel by extraction of gas from the vessel (2,4),
said method being such that incoming waste is introduced into the drying first vessel (2) operating under a vacuum and the dried waste from the first vessel (2) is introduced into the calcining second vessel (4) operating under a vacuum,
said method being **characterized in that** it comprises at least one instance (14,12) of recycling gas from the second vessel (4) to the second vessel (4) after heating through the system (5) for external heating of the second vessel (4), preferably carried out by passage within the combustion chamber (5) of said second vessel (4).

11. Thermolysis method according to any one of claims 10 or 11, wherein gas from the second vessel (4) is recycled (30, 29, 11) to the first vessel (2), possibly after heating through the system for external heating (3) of said first vessel (2).

12. Thermolysis method according to one of claims 10 or 11, wherein the combustion chamber (5) of the second vessel (4) comprises a wall forming a double shell surrounding the vessel (4), and said heating of the recycled gas through the system for external heating (5) of the second vessel (4) is carried out by passage inside the double shell of the second vessel (4).

13. Thermolysis method according to any one of claims 10 to 12, wherein at least one of the two combustion chambers (3, 5) of the first vessel (2) and of the second vessel (4) is supplied (27, 28) by at least part of the gases from the first vessel (2) and/or from the second vessels (4).

14. Thermolysis method according to claim 13, wherein said part of the gases are pre-treated before supplying the combustion chamber or chambers (3,5).

15. Thermolysis method according to any one of claims 10 to 14, wherein the solid residues from the second vessel (4) are cooled in a cooling third vessel (6) operating in a vacuum.
